(19)

**Europäisches Patentamt**
**European Patent Office**
**Office européen des brevets**

(11) **EP 4 462 154 A1**

(12) **EUROPEAN PATENT APPLICATION**

(43) Date of publication:
**13.11.2024 Bulletin 2024/46**

(21) Application number: **24171637.2**

(22) Date of filing: **22.04.2024**

(51) International Patent Classification (IPC):
**G01S 7/48** (2006.01)   **G01S 17/42** (2006.01)
**G01S 17/66** (2006.01)   **G01S 17/93** (2020.01)

(52) Cooperative Patent Classification (CPC):
**G01S 7/4802; G01S 7/4808; G01S 17/42;**
**G01S 17/66; G01S 17/93**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023   KR 20230059938**

(71) Applicant: **Chungbuk National University Industry-Academic Cooperation Foundation Cheongju-si, Chungcheongbuk-do 28644 (KR)**

(72) Inventors:
• **PARK, Tae Hyoung**
  **28617 Cheongju-si, Chungcheongbuk-do (KR)**
• **LEE, Jun Hyeok**
  **28645 Cheongju-si, Chungcheongbuk-do (KR)**

(74) Representative: **BCKIP Part mbB**
  **Siegfriedstraße 8**
  **80803 München (DE)**

(54) **METHOD AND APPARATUS FOR OBJECT TRACKING OF MOBILE ROBOTS USING 2D LIDAR-BASED MARKERS**

(57)   The present disclosure provides a method and device for estimating a pose of a target object using a 2D LiDAR-based marker in a mobile robot.

According to one embodiment, the present disclosure provides a method for estimating a pose of a target object using a 2D LiDAR-based marker in a mobile robot, including acquiring first point cloud data including distance and reflection intensity information using a 2D LiDAR sensor of a mobile robot, extracting second point cloud data corresponding to a high-brightness reflective material included in a marker attached to an object from the first point cloud data, clustering the second point cloud data into at least one cluster, identifying a target cluster corresponding to the target object among the at least one cluster, and estimating a pose of the target object based on change in the target cluster.

*10*

FIG. 1

**Description**

## TECHNICAL FIELD

The present disclosure relates to a method and device for object tracking of a mobile robot using a 2D LiDAR-based marker. More specifically, the present disclosure relates to a technology for a mobile robot to identify a target object and estimate a pose of the target object using a 2D LiDAR-based marker.

## BACKGROUND

The content described below simply provides background information related to the present embodiment and does not constitute the related art.

Mobility as a service (MaaS) is expected to grow in market size in the future, and based on this expectation, a mobile robot will mainly track a person and perform a role of helping or collaborating with the person.

A mobile robot may be used to carry and move objects at various places such as a factory, a distribution center, a museum, a restaurant, a supermarket, an airport, or a smart farm, or to provide information or services to people while moving. In particular, when a person loads an object on the mobile robot and moves it at an airport, supermarket, factory, or the like, the mobile robot may move along with the person. Since the mobile robot automatically recognizes and tracks the person, there is an advantage that the person does not need to directly control a transport device such as a cart to load objects into the transport device and move the transport device.

In order for the mobile robot to perform this role, the mobile robot should be able to recognize and track the person and secure a safe distance. Further, the mobile robot should be able to reliably track the person even in a crowded environment.

Deep learning-based methods (for example, Mask R-CNN, YOLO, or SSD) can be generally used to recognize and/or track an object. However, the deep learning-based methods require high-performance hardware, which increases price of the mobile robot.

In the case of image sensors such as cameras, the accuracy of object recognition in captured images may decrease depending on factors such as changes in lighting, low resolution, and occlusion. A LIDAR (LIght Detection And Ranging) sensor is a sensor that measures a distance to a reflection body by shooting a laser pulse and measuring a return time, has high precision, but is relatively expensive.

Therefore, there is a need for technology that can construct a cost-effective and robust system for a mobile robot to recognize and track a target object.

## SUMMARY

The purpose of the present disclosure is to provide a technology for allowing a mobile robot to recognize and track an object using a marker attached to the object and a 2D LiDAR sensor mounted on the mobile robot.

The purpose of the present disclosure is to provide a technology for detecting an object and estimating a pose of the object using a marker including a high-brightness reflective material in a mobile robot.

The purposes of the present disclosure are not limited to those mentioned above, and other purposes not mentioned herein will be clearly understood by those skilled in the art from the following description.

According to one embodiment, the present disclosure provides a method for estimating a pose of a target object using a 2D LiDAR-based marker in a mobile robot, including acquiring first point cloud data including distance and reflection intensity information using a 2D LiDAR sensor of a mobile robot, extracting second point cloud data corresponding to a high-brightness reflective material included in a marker attached to an object from the first point cloud data, clustering the second point cloud data into at least one cluster, identifying a target cluster corresponding to the target object among the at least one cluster, and estimating a pose of the target object based on change in the target cluster.

According to another embodiment, the present disclosure provides a device for estimating a pose of a target object using a 2D LiDAR-based marker in a mobile robot, including at least one memory storing computer-executable instructions; and at least one processor, wherein the at least one processor is configured to execute the computer-executable instructions to: acquire first point cloud data including distance and reflection intensity information using a 2D LiDAR sensor of a mobile robot; extract second point cloud data corresponding to a high-brightness reflective material included in a marker attached to an object from the first point cloud data; cluster the second point cloud data into at least one cluster; identify a target cluster corresponding to the target object among the at least one cluster; and estimate a pose of the target object based on change in the target cluster.

According to an embodiment of the present disclosure, there is an effect that it is possible to construct a cost-effective system for object recognition and tracking of a mobile robot.

According to an embodiment of the present disclosure, there is an effect that it is possible to improve the accuracy of object recognition and tracking of the mobile robot and reduce computational costs.

The effects of the present disclosure are not limited to the effects mentioned above, and other effects not mentioned may be clearly understood by those skilled in the art from the description below.

## BRIEF DESCRIPTION OF THE DRAWINGS

FIG. 1 is a block diagram of a device for estimating a pose of a target object using a 2D LiDAR-based marker in a mobile robot according to an embodiment of the present disclosure.

FIG. 2 is an illustrative diagram showing a marker on which a plurality of high-brightness reflective materials having different sizes are disposed according to an embodiment of the present disclosure.

FIG. 3 is an illustrative diagram showing change in the number of the points of point cloud data corresponding to high-brightness reflective materials according to change in a pose of an object.

FIG. 4 is an illustrative diagram showing a ratio between the number of points detected corresponding to the high-brightness reflective material placed on the left and the number of points detected corresponding to the high-brightness reflective material placed on the right when a 2D LiDAR sensor and an object are located vertically.

FIG. 5 is an illustrative diagram showing that, when the 2D LiDAR sensor and the object are located vertically and a distance between the 2D LiDAR sensor and the object changes, the number of points detected changes but the ratio remains the same.

FIGS. 6a and 6b are illustrative diagrams showing that a ratio changes as the number of points detected corresponding to the left and right high-brightness reflective materials changes depending on change in the pose of the object.

FIG. 7 is a flowchart of a method for estimating a pose of a target object using a 2D LiDAR-based marker in a mobile robot according to an embodiment of the present disclosure.

## DETAILED DESCRIPTION

Hereinafter, some embodiments of the present disclosure will be described in detail with reference to the accompanying drawings. In the following description, like reference numerals preferably designate like elements, although the elements are shown in different drawings. Further, the following description of some embodiments will omit for the purpose of clarity and for brevity, a detailed description of related known components and functions when considered obscuring the subject of the present disclosure.

Various ordinal numbers or alpha codes such as first, second, i), ii), a), b), etc., are prefixed solely to differentiate one component from the other but not to imply or suggest the substances, order, or sequence of the components. Throughout this specification, when a part "includes" or "comprises" a component, the part is meant to further include other components, to not exclude thereof unless specifically stated to the contrary. The terms such as "unit," "module," and the like refer to units in which at least one function or operation is processed and they may be implemented by hardware, software, or a combination thereof.

The description of the present disclosure to be presented below in conjunction with the accompanying drawings is intended to describe exemplary embodiments of the present disclosure and is not intended to represent the only embodiments in which the technical idea of the present disclosure may be practiced.

The present disclosure provides a cost-effective and robust object tracking technology for estimating a pose of a tracking target object and predicting a behavior of the object based on sensors, that is, using a 2D LiDAR sensor and a marker attached to the tracking target object. Here, the tracking target object may include not only a person but also another mobile robot, but is not limited thereto.

A marker referred to herein is attached to an object and includes a plurality of high-brightness reflective materials having different sizes. The marker may include a plurality of high-brightness reflective materials aligned in a certain direction. The marker may be attached to a specific position (for example, a back or elbow) of the object within a detection range of the 2D LiDAR sensor. To increase the accuracy of marker recognition, it is desirable to attach the marker at a position with the same or similar height as the 2D LiDAR sensor of the mobile robot.

Further, different types of markers may be used for each object in order to identify the object. For example, each marker may have a barcode-like form, but is not limited thereto.

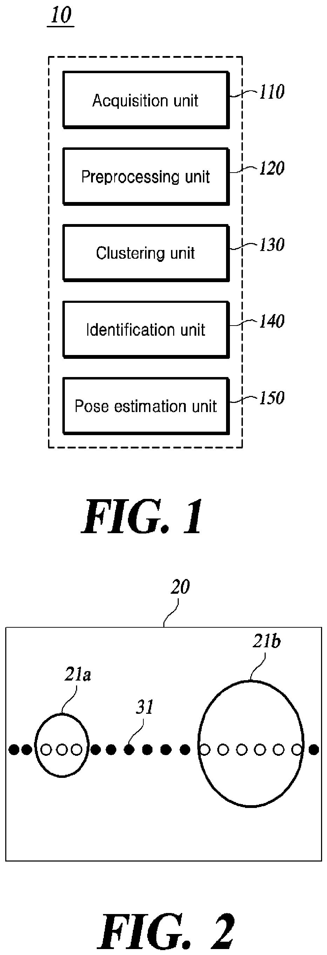

FIG. 1 is a block diagram of a device for estimating a pose of a target object using a 2D LiDAR-based marker in a mobile robot (hereinafter referred to as 'target object pose estimation device') according to an embodiment of the present disclosure.

Referring to FIG. 1, the target object pose estimation device 10 includes all or some of an acquisition unit 110, a preprocessing unit 120, and a clustering unit 130, an identification unit 140, and a pose estimation unit 150.

The target object pose estimation device 10 shown in FIG. 1 is according to an embodiment of the present disclosure, and some components may be added, changed, or deleted in other embodiments. For example, in the other embodiments, a control unit (not shown) that controls a behavior of the mobile robot based on the estimated pose of the target object may be further included.

FIG. 1 shows the target object pose estimation device 10 as a device for convenience of description. In another embodiment, the target object pose estimation device 10 and each component thereof may be implemented in hardware or software, or may be implemented through a combination of hardware and software. Further, a function of each component may be implemented as software, and one or more processors may be implemented to execute a function of the software corresponding to each component.

The acquisition unit 110 acquires the point cloud data using the 2D LiDAR sensor of the mobile robot. The point cloud data includes information on distance and reflection intensity. The reflection intensity may refer to the intensity of a reflected signal that is received by the 2D LiDAR sensor. The point cloud data includes 2D coordinate information on detected points.

The preprocessing unit 120 extracts point cloud data corresponding to a high-brightness reflective material included in a marker attached to an object from the point cloud data acquired by the acquisition unit 110. This is intended to use only the point cloud data reflected from the high-brightness reflective material included in the marker attached to the object for identification and pose estimation of the target object.

The preprocessing unit 120 extracts the point cloud data having a value of the reflection intensity equal or greater than a threshold among the acquired point cloud data as the point cloud data corresponding to the high-brightness reflective material included in the marker attached to the object. This is because the point cloud data having the value of the reflection intensity equal or greater than the threshold may be determined to have been reflected from the high-brightness reflective material included in the marker attached to the object.

FIG. 2 is an illustrative diagram showing a marker on which a plurality of high-brightness reflective materials having different sizes are disposed according to an embodiment of the present disclosure.

Referring to FIG. 2, a marker 20, a plurality of high-brightness reflective materials 21a and 21b, and the point cloud data 31 are shown. Only points reflected from the high-brightness reflective materials 21a and 21b are extracted from the point cloud data 31 by the preprocessing unit 120.

The preprocessing unit 120 may further perform noise removal, downsampling, or the like on the point cloud data.

The clustering unit 130 clusters the preprocessed the point cloud data into at least one cluster. That is, the preprocessed the point cloud data is divided into groups of points corresponding to the marker for each object.

The clustering unit 130 may perform distance-based clustering on the preprocessed the point cloud data. For example, Euclidean distance, Manhattan distance, Minkowski distance, Chevyshev distance, density, or the like may be used as similarity measures, and a K-mean algorithm or the like may be used as a clustering algorithm, but the present disclosure is not limited to thereto.

The identification unit 140 identifies a target cluster corresponding to the target object among at least one cluster. The target object refers to an object that the mobile robot follows, and the target object may be identified by an attached marker. The target cluster refers to a cluster of points that detect the marker attached to the target object.

The identification unit 140 may compare a shape of at least one cluster with a preset shape to identify the target cluster corresponding to the target object. Even when there are a plurality of clusters, markers having different shapes can be used for each object, and thus, a cluster that is most similar to a shape set in the mobile robot in advance among the plurality of clusters can be identified as the target cluster.

The pose estimation unit 150 estimates the pose of the target object based on the target cluster.

A normal vector for a straight line passing through the points of the point cloud data included in the target cluster may be calculated, and the pose of the target object may be estimated based on the calculated normal vector. However, the pose estimation using the normal vector may predict a direction in which a person wants to move, but there is a difficulty in pose estimation.

The pose estimation unit 150 divides the points of the point cloud data included in the target cluster into groups corresponding to a plurality of high-brightness reflective materials having different sizes, and estimates the pose of the target object using change in a ratio between the numbers of points included in the respective groups.

First, change in the points of the point cloud data corresponding to the high-brightness reflective materials included in the marker attached to the object depending on a position and/or direction of the object will be described.

When the object rotates clockwise or counterclockwise and its pose changes, a distance between the 2D LiDAR sensor and the high-brightness reflective material changes, and thus, the number of points of the point cloud data corresponding to the high-brightness reflective materials included in the marker may change. Accordingly, change in the pose of the object can be estimated based on the change in the number of points of the point cloud data corresponding to the high-brightness reflective material included in the marker.

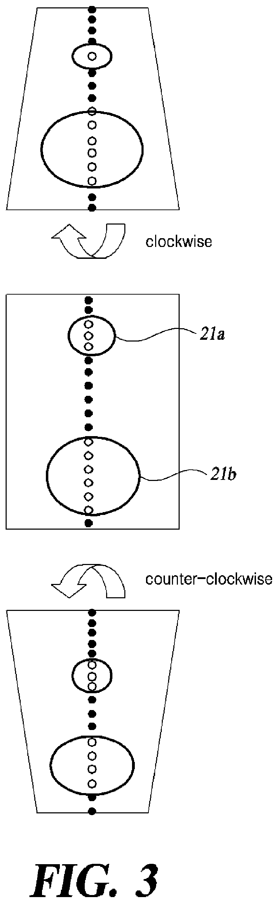

It can be seen from FIG. 3 that the number of points in the point cloud data corresponding to a left high-brightness reflective material 21a included in a left marker indicating a case where the object rotates clockwise decreases. It can be seen that the number of points in the point cloud data corresponding to a right high-brightness reflective material 21b included in a right marker indicating a case where the object rotates counterclockwise decreases.

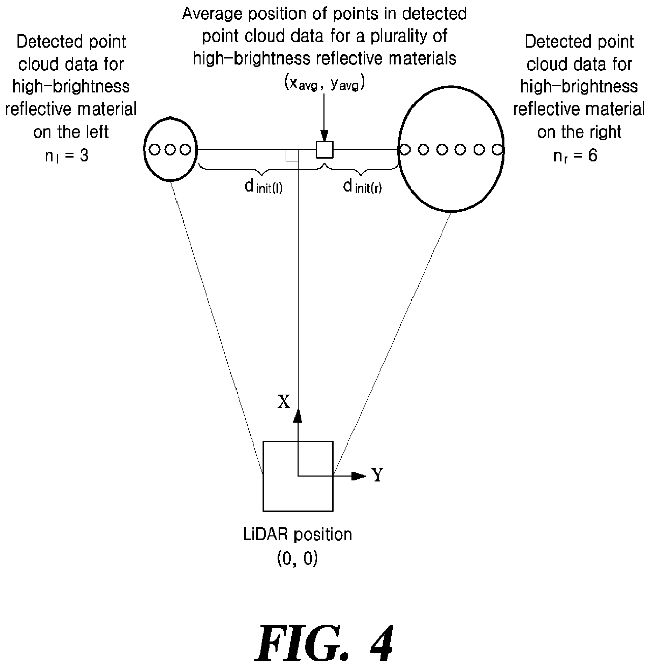

Referring to FIG. 4, when the 2D LiDAR sensor and the object are located vertically, the number of points corresponding to each high-brightness reflective material, an average position of the points corresponding to the plurality of high-brightness reflective materials, and a distance between the average position and each high-brightness reflective material is shown. It can be seen that a ratio between the number of points corresponding to a left high-brightness reflective material and the number of points corresponding to a right high-brightness reflective material is 3:6. Further, a ratio between distances can be calculated from the ratio $n_r:n_l$ as shown in Equation 1.

(Equation 1)

$$d_{init(l)} : d_{init(r)} = n_r : n_l$$

Here, ni is the number of points corresponding to the left high-brightness reflective material, $n_r$ is the number of points corresponding to the right high-brightness reflective material, $d_{init(l)}$ is a distance between an average position of points corresponding to the left and right high-brightness reflective materials and the left high-brightness reflective material, and $d_{init(r)}$ is a distance between the average positions of the points corresponding to the left and right high-brightness reflective materials and the right high-brightness reflective material.

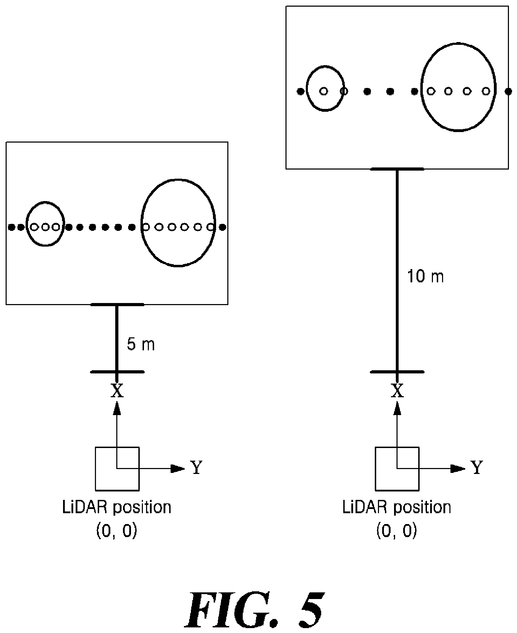

As long as the 2D LiDAR sensor and the object are located perpendicularly, the ratio $n_r:n_l$ remains constant regardless of the distance between the object and the 2D LiDAR sensor. That is, as shown in FIG. 5, the number of points corresponding to each high-brightness reflective material varies depending on the distance between the object and the 2D LiDAR sensor, but the ratio $n_r:n_l$ remains constant at 6:3 or 4:2.

When the object rotates clockwise or counterclockwise and its pose changes, the ratio $n_r:n_l$ changes.

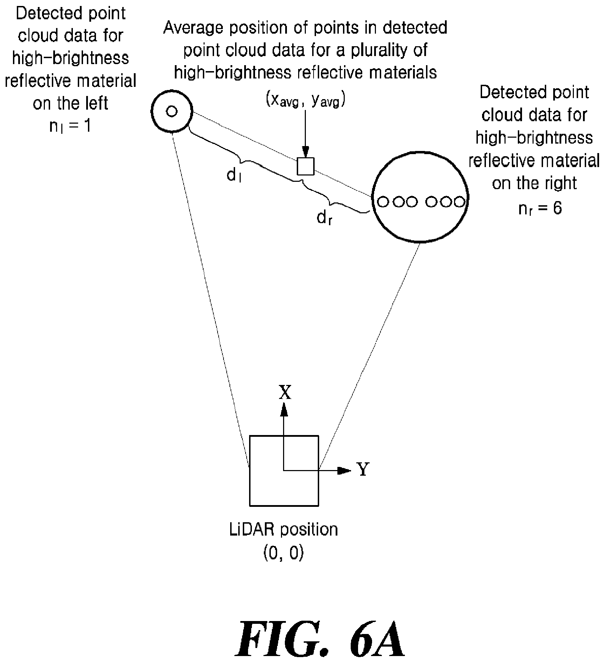

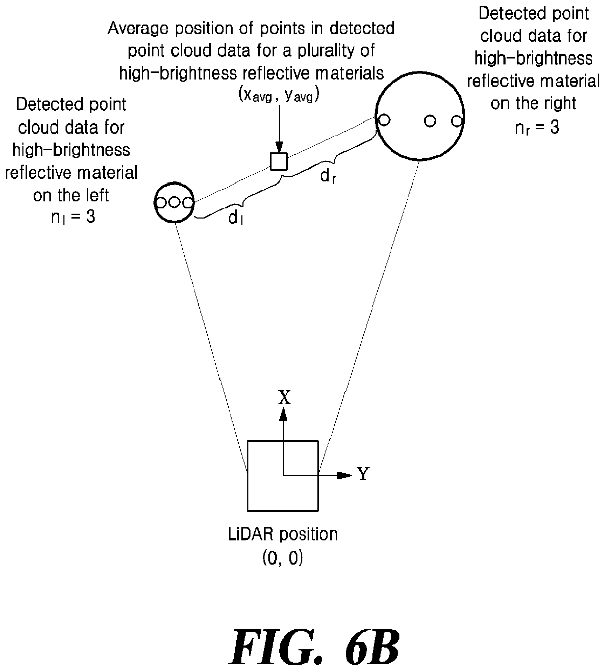

Referring to FIG. 6, it can be confirmed that when the object rotates clockwise and the pose changes, the ratio $n_r:n_l$ is 6:1 which is different from 6:3 when the object in FIG. 4 is located perpendicular to the 2D LiDAR sensor.

Referring to FIG. 6b, it can be confirmed that when the object rotates counterclockwise and the pose changes, the ratio $n_r:n_l$, is 3:3 which is different from 6:3 when the object in FIG. 4 is located perpendicular to the 2D LiDAR sensor.

Therefore, when the ratio $n_r:n_l$ changes, it can be estimated that the pose of the object has changed. A rotation direction and rotation angle of the object can be calculated as shown in Equation 2 and Equation 3.

(Equation 2)

$$\begin{cases} rot = \text{ clockwise rotation}, & \text{if}, \quad \dfrac{d_{init(l)}}{d_{init(r)}} < \dfrac{d_l}{d_r} \\ rot = \text{counterclockwise rotation}, \text{ f}, \quad \dfrac{d_{init(l)}}{d_{init(r)}} > \dfrac{d_l}{d_r} \end{cases}$$

Here, rot is the rotation direction of the object with a pose in which the object is located perpendicular to the 2D LiDAR sensor as a reference, and $d_{init(l)}$ and $d_{init(r)}$ are distances calculated according to Equation 1 when the object is located perpendicular to the 2D LiDAR sensor, and di and $d_r$ are distances calculated according to Equation 1 when the object rotates and is not located perpendicular to the 2D LiDAR sensor.

(Equation 3)

$$\begin{cases} \theta = \cos^{-1}\left(\dfrac{d_l}{d_{init(l)}}\right), & \text{if}, \ rot = \text{ clockwise rotation} \\ \theta = \cos^{-1}\left(\dfrac{d_r}{d_{init(r)}}\right), & \text{if}, \ rot = \text{ counterclockwise rotation} \end{cases}$$

Here, $\theta$ is a rotation angle of the object with a pose in which the object is located perpendicular to the 2D LiDAR sensor as a reference.

As described above, even when the distance between the object and the 2D LiDAR sensor is not constant, the ratio $n_r:n_l$ is constant, and thus, it is possible to robustly estimate the pose of the object regardless of the distance between the object and the 2D LiDAR sensor.

The pose estimation unit 150 divides the target cluster into a first group and a second group based on position information of the points of the point cloud data included in the target cluster. For example, the points corresponding to the left high-brightness reflective material 21a may be divided into the first group, and the points corresponding to the right high-brightness reflective material 21b may be divided into the second group.

The pose estimation unit 150 obtains a ratio between the number of points of the point cloud data included in the first group and the number of points of the point cloud data included in the second group.

The pose estimation unit 150 estimates the pose of the target object based on the change in the ratio over time. The pose estimation unit 150 may calculate the rotation direction and rotation angle of the target object using Equations 1 to 3 described above to estimate the pose.

The pose of the target object estimated by the pose estimation unit 150 may be used to predict and estimate a next state of the target object using a Kalman filter.

A control unit (not shown) controls the behavior of the mobile robot based on the estimated pose of the target object. The control unit may predict a behavior of the target object based on the estimated pose and control the behavior of the mobile robot to track the target obj ect.

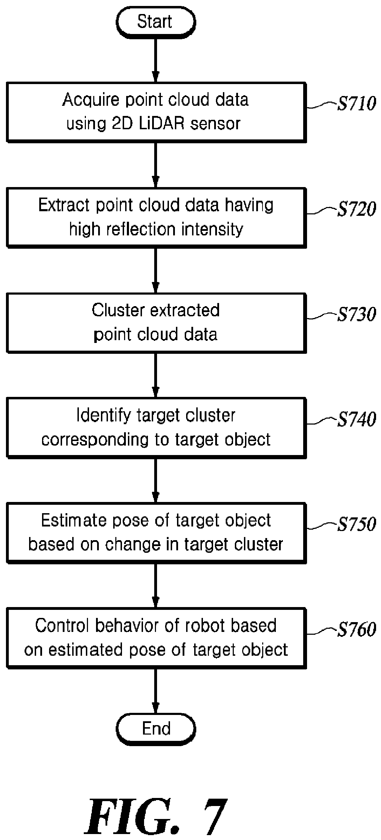

FIG. 7 is a flowchart of a method for estimating a pose of the target object using a 2D LiDAR-based marker in the mobile robot according to an embodiment of the present disclosure.

Referring to FIG. 7, the target object pose estimation device 10 acquires first point cloud data including distance and reflection intensity information using the 2D LiDAR sensor of the mobile robot (S710). The point cloud data includes 2D coordinate information of the detected points.

The target object pose estimation device 10 extracts second point cloud data corresponding to the high-brightness reflective material included in the marker attached to the object from the first point cloud data (S720). The target object pose estimation device 10 may extract, as the second point cloud data, the point cloud data having a value of the reflection intensity equal or greater than the threshold from the first point cloud data.

The target object pose estimation device 10 clusters the second point cloud data into at least one cluster (S730). Distance-based clustering may be performed on the second point cloud data.

The target object pose estimation device 10 identifies the target cluster corresponding to the target object among at least one cluster (S740). The target cluster corresponding to the target object may be identified by comparing a shape of at least one cluster with a preset shape.

The target object pose estimation device 10 estimates the pose of the target object based on the change in the target cluster (S750). The points of the point cloud data included in the target cluster are divided into groups corresponding to the plurality of high-brightness reflective materials having different sizes, and the pose of the target object may be estimated using the change in the ratio between the number of points included in the respective groups.

The target object pose estimation device 10 can control the behavior of the mobile robot based on the estimated pose of the target object (S760).

At least some of the components described in the exemplary embodiments of the present disclosure may be implemented as a hardware element including at least one or a combination of a digital signal processor (DSP), a processor, a controller, an application-specific IC (ASIC), a programmable logic device (FPGA, or the like), and other electronic devices. Further, at least some of functions or processes described in the exemplary embodiments may be implemented as software, and the software may be stored in a recording medium. At least some of the components, functions, and processes described in the exemplary embodiments of the present disclosure may be implemented through a combination of hardware and software.

The method according to exemplary embodiments of the present disclosure can be written as a program that can be executed on a computer, and can also be implemented in various recording media such as magnetic storage media, optically readable media, and digital storage media.

Implementations of the various techniques described herein may be realized by digital electronic circuitry, or by computer hardware, firmware, software, or combinations thereof. Implementations may be made as a computer program tangibly embodied in a computer program product, i.e., an information carrier, e.g., machine-readable storage device (computer-readable medium) or a radio signal, for processing by, or controlling the operation of a data processing device, e.g., a programmable processor, a computer, or multiple computers. Computer programs, such as the computer program(s) described above, may be written in any form of programming language, including compiled or interpreted languages, and may be deployed in any form as a stand-alone program or as a module, component, subroutine, or other units suitable for use in a computing environment. The computer program may be processed on one computer or multiple computers at one site or distributed across multiple sites and developed to be interconnected through a communications network.

Processors suitable for processing computer programs include, by way of example, both general-purpose and special-purpose microprocessors, and any one or more processors of any type of digital computer. Typically, a processor will receive instructions and data from read-only memory or random access memory, or both. Elements of the computer may include at least one processor that executes instructions and one or more memory devices that store instructions and data. In general, the computer may include one or more mass storage devices that store data, such as magnetic disks, magneto-optical disks, or optical disks, or may be coupled to the mass storage devices to receive data therefrom and/or transmit data thereto. Information carriers suitable for embodying computer program instructions and data include, for example, semiconductor memory devices, magnetic mediums such as hard disks, floppy disks, and magnetic tapes, optical mediums such as CD-ROM (Compact Disk Read Only Memory), DVD (Digital Video Disk), magneto-optical mediums such as floptical disk, ROM (Read Only Memory), RAM (Random Access Memory), flash memory, EPROM (Erasable Programmable ROM), and EEPROM (Electrically Erasable Programmable ROM). The processor and memory may be supplemented by or included in special purpose logic circuitry.

The processor may execute an operating system and software applications executed on the operating system. In addition, the processor device may access, store, manipulate, process, and generate data in response to the execution of software. For ease of understanding, the processor device may be described as being used as a single processor device, but those skilled in the art will understand that the processor device may include a plurality of processing elements and/or a plurality of types of processing elements. For example, a processor device may include a plurality of processors or one processor, and one controller. Further, other processing configurations, such as parallel processors, are also possible.

In addition, a non-transitory computer-readable medium may be any available medium that can be accessed by a computer and may include both a computer storage medium and a transmission medium.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention. It will be apparent to one of ordinary skill in the art that various modifications of the example embodiments may be made without departing from the spirit and scope of the claims and their equivalents.

Accordingly, one of ordinary skill would understand that the scope of the claimed invention is not to be limited by the above explicitly described embodiments but by the claims and equivalents thereof.

REFERENCE NUMERALS

110: Acquisition unit
120: Preprocessing unit
130: Clustering unit
140: Identification unit
150: Pose estimation unit

**Claims**

1. A method for estimating a pose of a target object using a 2D LiDAR-based marker in a mobile robot, the method comprising:

acquiring first point cloud data including distance and reflection intensity information using a 2D LiDAR sensor of a mobile robot;

extracting second point cloud data corresponding to a high-brightness reflective material included in a marker attached to an object from the first point cloud data;

clustering the second point cloud data into at least one cluster;

identifying a target cluster corresponding to the target object among the at least one cluster; and

estimating a pose of the target object based on change in the target cluster.

2. The method of claim 1, wherein the marker attached to the object comprises a plurality of high-brightness reflective materials having different sizes.

3. The method of claim 1 or 2, wherein the extracting comprises extracting, as the second point cloud data, point cloud data having a value of reflection intensity equal or greater than a threshold among the first point cloud data.

4. The method of any one of claims 1 to 3, wherein the clustering comprises performing distance-based clustering on the second point cloud data.

5. The method of any one of claims 1 to 4, wherein the identifying comprises comparing a shape of the at least one cluster with a preset shape to identify the target cluster corresponding to the target object.

6. The method of any one of claims 1 to 5, wherein the estimating comprises:

dividing the target cluster into a first group and a second group based on position information of the points of the point cloud data included in the target cluster;

acquiring a ratio between the number of the points of the point cloud data included in the first group and the number of the points of the point cloud data included in the second group; and

estimating the pose of the target object based on the change in the ratio.

7. The method of any one of claims 1 to 6, further comprising:
controlling a behavior of the mobile robot based on the estimated pose of the target object.

8. A device for estimating a pose of a target object using a 2D LiDAR-based marker in a mobile robot, the device comprising:

at least one memory storing computer-executable instructions; and
at least one processor,
wherein the at least one processor is configured to execute the computer-executable instructions to:

acquire first point cloud data including distance and reflection intensity information using a 2D LiDAR sensor of a mobile robot;

extract second point cloud data corresponding to a high-brightness reflective material included in a marker attached to an object from the first point cloud data;

cluster the second point cloud data into at least one cluster;

identify a target cluster corresponding to the target object among the at least one cluster; and

estimate a pose of the target object based on change in the target cluster.

9. The device of claim 8, wherein the marker attached to the object comprises a plurality of high-brightness reflective materials having different sizes.

10. The device of claim 8 or 9, wherein the at least one processor is configured to extract, as the second point cloud data, point cloud data having a value of reflection intensity equal or greater than a threshold among the first point cloud data.

11. The device of any one of claims 8 to 10, wherein the at least one processor is configured to perform distance-based clustering on the second point cloud data.

12. The device of any one of claims 8 to 11, wherein the at least one processor is configured to compare a shape of the at least one cluster with a preset shape to identify a target cluster corresponding to the target object.

13. The device of any one of claims 8 to 12, wherein the at least one processor is configured to divide the target cluster into a first group and a second group based on position information of the points of the point cloud data included in the target cluster, acquire a ratio between the number of the points of the point cloud data included in the first group and the number of the points of the point cloud data included in the second group, and estimate the pose of the target object based on the change in the ratio.

14. The device of any one of claims 8 to 13, wherein the at least one processor is further configured to control a behavior of the mobile robot based on the estimated pose of the target obj ect.

15. A computer-readable recording medium having instructions stored therein, wherein the instructions are executed by the computer to cause the computer to:

acquire first point cloud data including distance and reflection intensity information using a 2D LiDAR sensor of a mobile robot;
extract second point cloud data corresponding to a high-brightness reflective material included in a marker attached to an object from the first point cloud data;
cluster the second point cloud data into at least one cluster;
identify a target cluster corresponding to the target object among the at least one cluster; and
estimate a pose of the target object based on change in the target cluster.

<u>10</u>

FIG. 1

FIG. 2

**FIG. 3**

Detected point
cloud data for
high-brightness
reflective material
on the left
$n_l = 3$

Average position of points in detected
point cloud data for a plurality of
high-brightness reflective materials
$(x_{avg}, y_{avg})$

Detected point
cloud data for
high-brightness
reflective material
on the right
$n_r = 6$

$d_{init(l)}$

$d_{init(r)}$

X

Y

LiDAR position
(0, 0)

# FIG. 4

5 m

10 m

X

X

Y

Y

LiDAR position
(0, 0)

LiDAR position
(0, 0)

# FIG. 5

Detected point
cloud data for
high-brightness
reflective material
on the left
$n_l = 1$

Average position of points in detected
point cloud data for a plurality of
high-brightness reflective materials
$(x_{avg}, y_{avg})$

Detected point
cloud data for
high-brightness
reflective material
on the right
$n_r = 6$

$d_l$

$d_r$

X

Y

LiDAR position
(0, 0)

## FIG. 6A

Average position of points in detected
point cloud data for a plurality of
high-brightness reflective materials
$(x_{avg}, y_{avg})$

Detected point
cloud data for
high-brightness
reflective material
on the right
$n_r = 3$

Detected point
cloud data for
high-brightness
reflective material
on the left
$n_l = 3$

$d_r$

$d_l$

X

Y

LiDAR position
(0, 0)

# FIG. 6B

```
          ┌─────────┐
          │  Start  │
          └─────────┘
               │
               ▼
   ┌───────────────────────────┐
   │  Acquire point cloud data │────S710
   │   using 2D LiDAR sensor   │
   └───────────────────────────┘
               │
               ▼
   ┌───────────────────────────┐
   │ Extract point cloud data  │────S720
   │  having high reflection   │
   │        intensity          │
   └───────────────────────────┘
               │
               ▼
   ┌───────────────────────────┐
   │     Cluster extracted     │────S730
   │      point cloud data     │
   └───────────────────────────┘
               │
               ▼
   ┌───────────────────────────┐
   │     Identify target       │────S740
   │ cluster corresponding to  │
   │       target object       │
   └───────────────────────────┘
               │
               ▼
   ┌───────────────────────────┐
   │  Estimate pose of target  │────S750
   │  object based on change   │
   │     in target cluster     │
   └───────────────────────────┘
               │
               ▼
   ┌───────────────────────────┐
   │ Control behavior of robot │────S760
   │ based on estimated pose   │
   │     of target object      │
   └───────────────────────────┘
               │
               ▼
          ┌─────────┐
          │   End   │
          └─────────┘
```

# FIG. 7

Europäisches
Patentamt

European
Patent Office

Office européen
des brevets

# EUROPEAN SEARCH REPORT

Application Number

EP 24 17 1637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/108647 A1 (LEE DAVID K [US] ET AL) 11 April 2019 (2019-04-11) * paragraphs [0013] - [0017], [0022] - [0026], [0037] - [0040], [0045]; figures 1-4 * | 1-15 | INV. G01S7/48 G01S17/42 G01S17/66 G01S17/93 |
| X | US 2021/011135 A1 (LEE YU-CHEOL [KR] ET AL) 14 January 2021 (2021-01-14) * paragraphs [0007], [0053] - [0060], [0098] - [0101]; figures 1-4 * | 1-15 | |

TECHNICAL FIELDS
SEARCHED       (IPC)

G01S

The present search report has been drawn up for all claims

| Place of search | Date of completion of the search | Examiner |
|---|---|---|
| Munich | 12 September 2024 | Theißing, Nikolaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1637

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | Publication date | Patent family member(s) | Publication date |
|---|---|---|---|
| US 2019108647 A1 | 11-04-2019 | NONE | |
| US 2021011135 A1 | 14-01-2021 | NONE | |

For more details about this annex : see Official Journal of the European Patent Office, No. 12/82